# EUROPEAN PATENT APPLICATION

(11) **EP 0 841 583 A1**
(43) Date of publication of application: **13.05.1998**
(21) Application number: 97308952.7
(22) Date of filing: 07.11.1997
(51) Int. Cl.: G02B 7/16, H04N 5/225, G03B 5/06

(54) **Optical adaptor**

(30) Priority: 08.11.1996 GB 9623417
(71) Applicant: Samuelson Film Service London Limited, Greenford, Middlesex UB6 8UJ (GB)
(72) Inventor: Simmons, Richard Charles, Stevenage,Hertfordshire SG2 8SE (GB); Wood, Andrew Paul, Hitchin,Hertfordshire SG5 2UU (GB)
(74) Representative: Maggs, Michael Norman

(57) **Abstract**

An optical adaptor 10 is mounted optically between a prime lens 22 and an electronic camera and includes a prism arrangement 32 for providing an erect image at the camera and which includes a beam splitter 64 for providing an image through a periscope 24 to a ground glass 26. A turret wheel 40 is provided with a plurality of optically different field lens arrangements 28, 52-56. The turret wheel 40 may be selectively rotated to place a field lens arrangement compatible with the particular prime lens into an optical path leading through the optical adaptor 10 from its optical inlet 16 to its optical outlet 20.

## Description

The invention relates to an optical adaptor for optically connecting an optical prime lens to an electronic camera, such as for example a high definition charge coupled device camera for use in the film industry.

In the film industry, it is known to provide a cine camera, such as a 35mm, 16mm or Super-8 camera and for these to be used with a series of interchangeable prime lenses. Prime lenses, such as those for 35mm format cinematograph or still cameras, usually have exit pupil to image plane distances within the range of 25mm to 600mm. It is also known to provide electronic video cameras, such as high definition charge coupled device cameras. Unfortunately, prime lenses suitable for use with video cameras cannot normally be used in association with the rather different optics of video cameras. Typically, if one tries to attach a wide-angle prime lens to a video camera one runs into problems of vignetting.

This difficulty has resulted in companies who hire out cine cameras and video cameras needing to maintain separate stocks of lenses for each type of camera. Since the lenses are of extremely high quality, this is clearly extremely expensive.

It is known to provide a charge coupled device camera with a viewfinder for viewing of the image seen by a charged coupled device array, but it is necessary to power up the camera in order to view the image.

The present invention aims to alleviate these problems of the prior art.

According to a first aspect of the present invention there is provided an optical adaptor for optically connecting an optical prime lens to an electronic camera, the optical adaptor comprising a housing with an optical inlet for receiving radiation from an optical prime lens, an optical outlet for directing an optical output towards an electronic camera, and a field lens changer, the field lens changer being adapted to retain a plurality of field lens arrangements thereon, the field lens changer being adapted to move a selected field lens arrangement, when retained on the field lens changer, into an optical path between the optical inlet and optical outlet to a position in which the selected lens arrangement forms a field lens of the optical adaptor.

This is highly advantageous, since field lens arrangements with different optical qualities, may be retained in the field lens changer and, when desired, a particular field lens arrangement may be selected and placed into the optical path.

The optical adaptor may include a prism arrangement located in the housing optically between the optical inlet and optical outlet, the prism arrangement including a beam splitter for splitting radiation from the optical inlet into two optical paths, one leading towards the optical outlet and the other leading towards a viewfinder outlet of the housing.

According to a second aspect of the present invention there is provided an electronic camera optical adaptor for optically connecting an optical prime lens to an electronic camera, the optical adaptor comprising a housing with an optical inlet for receiving radiation from an optical prime lens, an optical outlet for directing an optical output towards an electronic camera, and a prism arrangement located in the housing optically between the optical inlet and optical outlet, the prism arrangement including a beam splitter for splitting radiation from the optical inlet into two optical paths, one leading towards the optical outlet and the other leading towards a viewfinder outlet of the housing. This is particularly advantageous, since with a viewfinder mounted to the viewfinder outlet, the picture viewed by a prime lens attached to the adaptor may be viewed optically, without passing through an electronic imaging device, such as a charge coupled device of an electronic camera to which the adaptor may be mounted. This is convenient, since it is not necessary to power up an electronic camera in order to see what its prime lens is aimed at and no viewfinder needs to be provided in the camera itself. A viewfinder with a relatively wide field of view may be connected to the viewfinder outlet, having a wider field of view than that of an electronic imaging device of an electronic camera to which the optical adaptor may be mounted. This is advantageous because the camera operator is able to anticipate what is about to move into the field of view of the camera itself.

Preferably, the prism arrangement is adapted to rotate the configuration of a generally collimated optical signal passing into it by substantially 180°. Thus, the prism arrangement may conveniently erect optical radiation passing through the optical adaptor into a proper configuration for an electronic camera.

Preferably, the prism arrangement is adapted to provide to the viewfinder outlet a larger field of view of optical radiation entering the housing at the optical inlet than the field of view which is provided to the optical outlet for directing the optical output towards an electronic camera. The prism may be manufactured relatively easily to achieve this function.

Preferably, the proportion of optical radiation passed by the beam splitter towards the optical outlet of the housing is substantially larger than that directed towards the viewfinder outlet. The ratio is preferably between 70:30 and 90:10 and may be about 30:20.

The prism arrangement may comprise first and second prism elements. In this case, the first prism element preferably includes first and second planar reflective surfaces in an optical path leading through the prism arrangement from the optical inlet to the optical outlet, the second planar reflective surface in the optical path being partially reflective and forming the beam splitter. Preferably, the second prism element includes first, second, third and fourth planar reflective surfaces in an optical path leading through the prism from the optical inlet of the housing to the optical outlet, the second and third surfaces in the optical path being substantially perpendicular to one another and forming roof surfaces of the second prism element.

Preferably, the second prism element is spaced from the first prism element and preferably the first and second prism elements include substantially parallel and planar spaced surfaces which are adjacent one another, the adjacent surface of the second prism being narrower in at least one direction than the adjacent surface of the first prism. Thus, the second prism may cut the top and bottom, or the sides, off the field of view of the object that is passed to the optical outlet.

In a preferred embodiment, the adaptor includes a viewfinder mounted to the viewfinder outlet, the viewfinder including a ground glass for imaging an object viewed by the adaptor via a prime lens which may be mounted to the adaptor. Preferably, the full field entering the adaptor is relayed to the viewfinder ground glass screen at unit magnification and preferably only a demagnified CCD field is provided through the optical outlet.

When the optical adaptor includes a prism arrangement as discussed above, preferably, first and second lens arrays are mounted in the housing, the first lens array being located in an optical path leading from the optical inlet to the prism arrangement, the second lens array being located in an optical path leading from the prism arrangement to the optical outlet. Preferably, at least one of the lens arrays comprises a plurality of optical lenses which are fixedly mounted in the housing. Preferably, the first lens array is adapted to collimate, or at least substantially reduce the divergence of, diverging optical radiation passing through the housing from the optical inlet towards the prism arrangement and the second array is adapted to magnify and converge radiation passing from the prism arrangement towards the optical outlet.

Preferably, the optical adaptor in accordance with the second aspect of the invention includes a field lens changer which is adapted to retain a plurality of field lens arrangements thereon, the field lens changer being adapted to move a selected field lens arrangement, when retained on the lens changer, into an optical path between the optical inlet and optical outlet to a position in which the selected lens arrangement forms a field lens of the optical adaptor.

In cases where the optical adaptor is provided with a field lens changer, the field lens changer preferably comprises a rotatable turret which is mounted to the housing by an axle, the turret having a series of lens arrangement retainers at locations spaced around the axle, the axle being offset from and substantially parallel to an optical axis of the adaptor, such as a principal axis thereof. Preferably, a plurality of field lens arrangements are mounted to the field lens changer, at least two of the field lens arrangements having different entrance pupil lengths. Thus, if a particular prime lens is connected to the optical adaptor, the field lens arrangement with the entrance pupil closest to the exit pupil of the prime lens may be selected in order to minimise vignetting.

Preferably, at least three, preferably at least five or six, field lens arrangements are mounted to the field lens changer, the field lens arrangements all having different entrance pupil lengths, changing of the field lens arrangements in sequence providing substantially or approximately equal incremental differences in angle of the chief ray accepted by the optical adaptor. For example, with six field lens arrangements, the entrance pupil distances may range to provide nominal pupil conjugate distances ranging from about 25mm (preferably as low as 18mm) up to 600mm. In one example, there are six field lens arrangements which are arranged so that their respective nominal prime lens exit pupil plane to intermediate image plane distances are 25,31,40.5,59,107 and 600mm respectively. Under nominal conditions, the exit pupil of the selected prime lens will coincide with the optical adaptor's entrance pupil and the position of the intermediate image plane (or input plane) will be the same for each selected field lens arrangement i.e. fixed with respect to a housing or chassis of the adaptor).

Preferably, the lens changer is sealed inside the housing. The housing may include a window such as a plane window sealingly located at each of the optical inlet and optical outlet in order to effect sealing.

Preferably, the adaptor includes connector means adjacent the optical inlet for connecting an optical prime lens to the housing. Preferably, the adaptor includes connector means adjacent the optical outlet for connecting the housing to part of an electronic camera. The connector means may be of any conventional standard, such as any one of the standards used in the film industry.

Preferably, the housing is elongate and the optical inlet and optical outlet are located at opposite ends of the housing. Preferably, the length of the housing is less than 250mm, the length in one example being about 236mm.

Preferably the speed or f/number of the adaptor in image space is at least f/5, preferably at least f/3, f/2.8 being the value in one example.

According to a third aspect of the present invention there is provided an electronic camera having an electronic image receiving means, and an adaptor according to the first or second aspect of the invention, the adaptor being mounted to a body of the camera for directing optical radiation along an optical path leading to the electronic image receiving means. Preferably, the electronic image receiving means comprises a charge coupled device array. The camera may include colour splitting means, such as prism means located optically between the optical adaptor and the electronic image receiving means.

The present invention may be carried out in various ways and two embodiments of optical adaptors in accordance with the invention will now be described by way of example with reference to the accompanying drawings, in which:-
Figure 1 shows a partial side elevation of a preferred embodiment of an optical adaptor in accordance with the present invention;
Figure 2 shows a partial side elevation of a second example of an optical adaptor in accordance with the present invention;

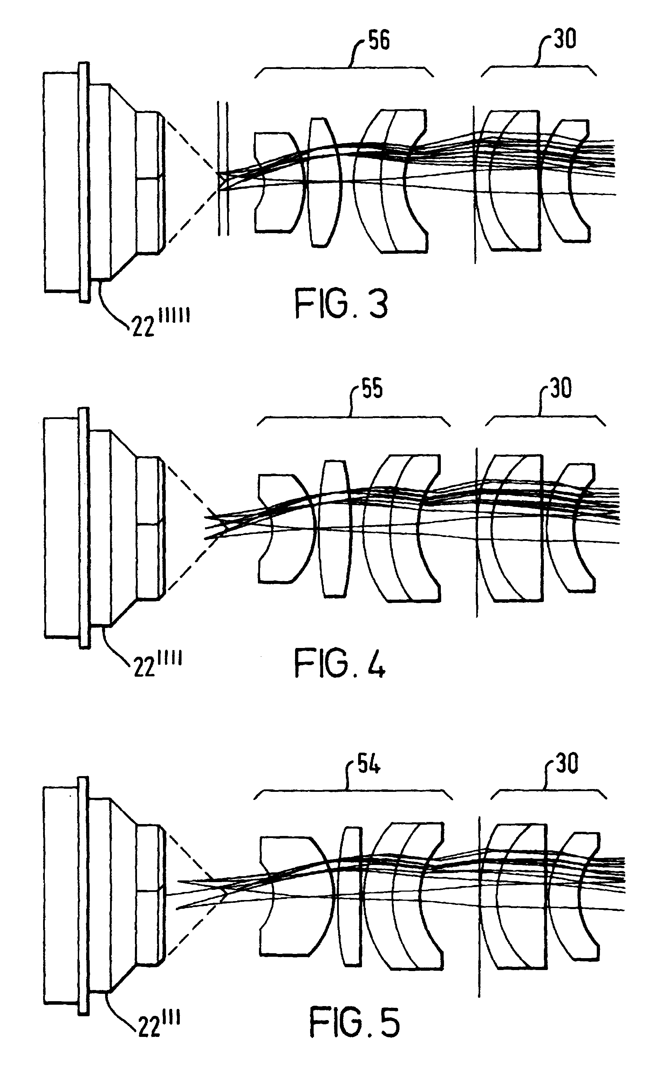

Figures 3 to 7 are partial side elevations of the optical adaptor of Figure 1, with each showing a particular field lens arrangement located to receive radiation entering a housing of the adaptor;
Figure 8 is a front view of a turret wheel for the adaptor of Figure 1;
Figure 9 is a side view of the turret wheel of Figure 9, showing the turret wheel and schematically showing fixed lenses and a prism arrangement of the optical adaptor of Figure 1;
Figure 10 is a perspective view of a prism arrangement for the optical adaptor of Figure 1;
Figure 11 is a side elevation of the prism arrangement of Figure 10;
Figure 12 is an end view of the prism arrangement of Figure 10; and
Figure 13 is a schematic view of a preferred CCD camera for use with the optical adaptor.

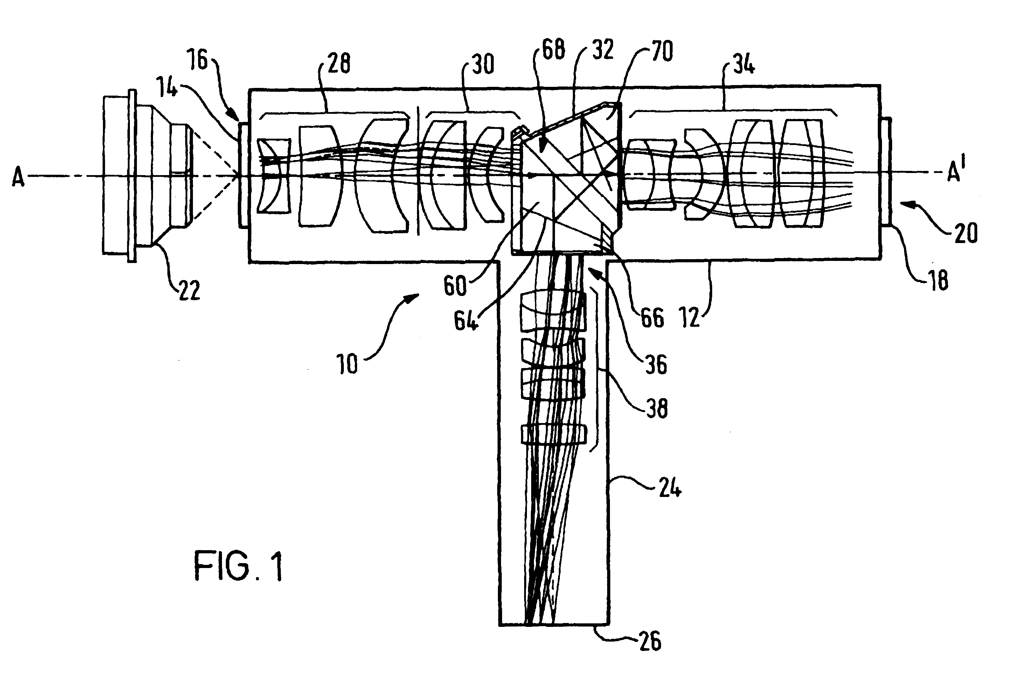

Figure 1 shows a preferred example of an optical adaptor 10 in accordance with a preferred embodiment of the present invention. The adaptor has a housing 12 which is shown schematically on Figure 1. The housing 12 has a plane glass window 14 located at an optical inlet 16 of the housing and a plane glass window 18 located at an optical outlet of the housing. The housing 12 may be connected at the optical inlet by a conventional connector (not shown) to a prime lens 22 which is shown schematically in Figure 1. The housing 12 may be connected with a conventional mount (not shown) at the optical outlet 20 to the body not shown) of a charge coupled device camera or other type of video camera not shown).

The housing 12 includes a periscope 24 which terminates at a ground glass 26.

Inside the housing, light entering through the optical inlet 16 passes first through a field lens arrangement 28, and then passes through a fixed collimating lens group 30 into a prism arrangement 32. The detail of the prism arrangement 32 will be discussed below.

A proportion - about 80% - of the light entering the prism arrangement 32 is passed through a further lens group 34 and then through the window 18 at the optical outlet 20.

A smaller proportion - about 20% - of the light entering the prism arrangement 32 exits the prism arrangement 32 through a viewfinder outlet 36 of the housing, through an imaging lens group 38 to the ground glass 26, where an object viewed by the prime lens 22 is imaged.

The field lens arrangement 28 has a nominal entrance pupil (not shown) which is 600mm from its nominal input plane (an intermediate image plane) 29. The entrance pupil of the field lens arrangement 28 coincides, under nominal conditions, with the exit pupil (not shown) of the prime lens 22. This coincidence ensures that light is passed through the prime lens 22 and optical adaptor 10 to a charge coupled device camera connected to the optical outlet 20 of the adaptor 10, with substantially no vignetting.

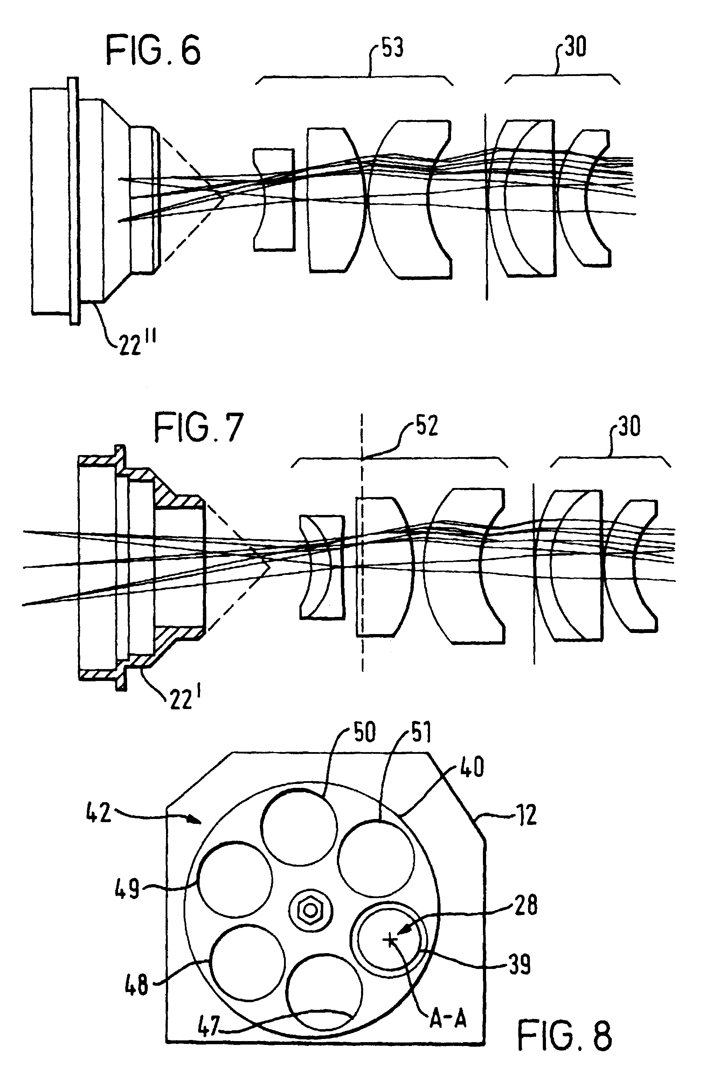

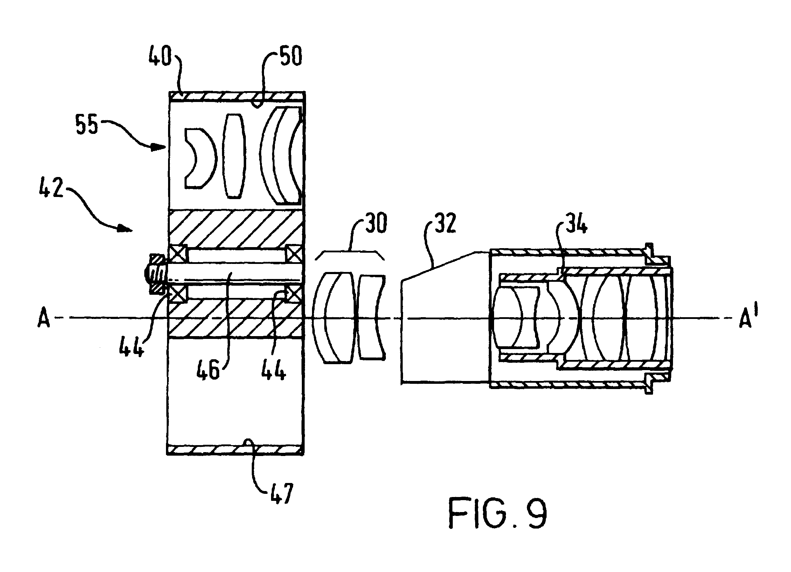

As shown in Figure 8, the field lens arrangement 28 is mounted in a lens retainer 39 of a turret wheel 40 of a lens changer 42, the lens changer 42 being sealingly located inside the housing 12. As shown in Figure 9, the turret wheel 40 is rotatably mounted by bearings 44 to an axle 46. The axle 46 is mounted to the housing 12 spaced from and parallel to a principal axis A-A' of the optical adaptor which passes through the centres of the various lenses of the collimating lens group 30 and further lens group 34.

The lens retainer 39 is cylindrical and its axis is the same distance from the axis of the axle 46 as the optical axis A-A' and, in Figure 8, the axis of the lens changer is coincident with the optical axis A-A'.

The lens retainer 39 is one of six similar lens retainers which are equally spaced around the axle 46 on the turret wheel 40. The other five lens retainers 47-51 retain five further field lens arrangements 52-56 respectively.

The field lens arrangements 28, 52-56 are mounted in the lens retainers 29, 47-51 by mounts (not shown). The lens arrangements may be mounted to the lens retainers in cartridges (not shown) which permit the selective removal or replacement of the lens arrangements.

If the prime lens 22 is removed from the housing 10 and replaced with a different prime lens 22' (see Figure 7) which has an exit pupil closer to the optical inlet 16 of the housing 10, then, with the field lens arrangement 28, vignetting could occur. The turret wheel 40 may be rotated one position to place the field lens arrangement 52 in line with the optical axis A-A'. This field lens arrangement 52 has a shorter entrance pupil distance and is nominally compatible with the prime lens 22' whose exit pupil (not shown) is 107mm in front of the nominal input plane or intermediate image plane 29' which has the same position along the housing 12 as the plane 29 of Fiuure 1. The field lens arrangement 52 is compatible with the prime lens 22', so long as the exit pupil of the prime lens 22' is approximately coincident with the nominal entrance pupil of the field lens arrangement 52. The four additional field lens arrangements 53-56 in the turret wheel 40 have progressively shorter entrance pupil distances and, in a similar manner, are compatible with different prime lenses 22'' , 22''', 22'''', and 22''''' which have exit pupils progressively less distance from (i.e. 59,40.5, 31 and 25mm respectively from the fixed nominal intermediate image plane 29,29'. These progressively shorter entrance pupil distances provide substantially equal increments in angle of the chief ray accepted by the optical adaptor, which is the significant parameter effecting the imaging of the optical adaptor.

By virtue of the rotatable turret wheel 40 and different field lens arrangements 28, 52-56, the optical adaptor 10 is extremely versatile and, when a particular prime lens is fitted to the adaptor 10 it is easy to select the appropriate field lens arrangement to minimise vignetting, or indeed to produce a vignetting effect if that is desired.

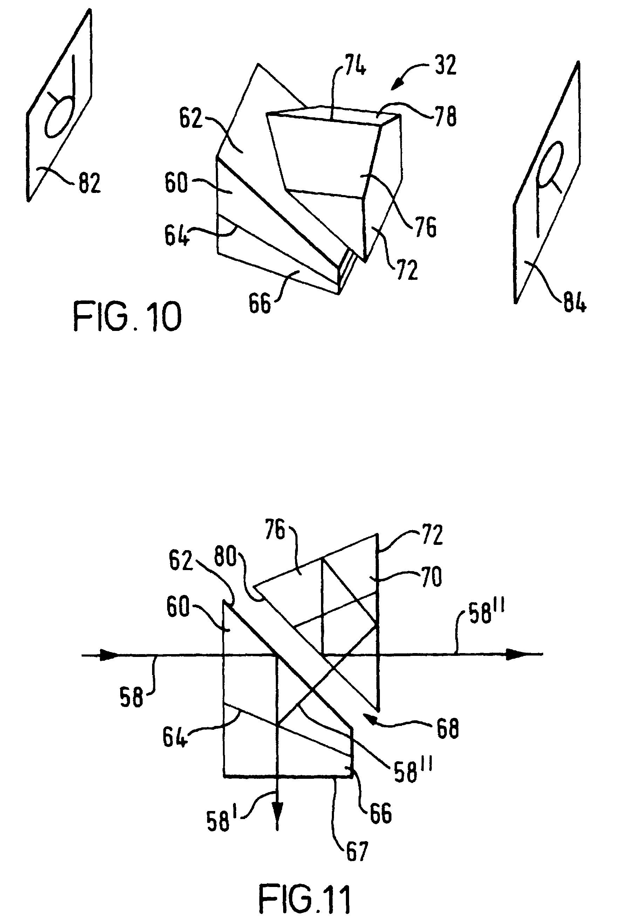

Referring to Figure 10, the prism arrangement 32 resembles a standard "Pechan" prism with the addition of a roof and a lower prism block of trapezium-shaped section. Figure 11 shows the path through the prism arrangement 32 of a ray 58 of optical radiation which enters the prism arrangement 32 along the optical axis A-A' of the optical adaptor. The ray 58 passes into the interior of a first prism element 60 and is reflected at a first reflective surface 62 towards a second reflective surface 64 of the first prism element. The second reflecting surface 64 is only partially reflective and approximately 20% of the radiation reaching the second reflective surface is transmitted through it as a ray 58' through a transmissive support block 66 into the periscope 24. The support block 66 has an exit surface 67 (Fig.11) perpendicular to an optical axis "B" of the periscope 24 to minimise wedge abberations. Approximately 80% of the intensity of the ray 58 is reflected as a ray 58' through an air gap 68, and into a second prism element 70. The ray 58'' is reflected by a first reflective surface 72 of the second prism block, towards a roof ridge 74 formed by two reflective perpendicular roof surfaces 76, 78, from where it passes to a fourth reflective surface 80 which directs the ray 58'' out of the second prism element through the first reflective surface 72. As shown in Figure 10, the prism arrangement 32 serves to invert a bundle of generally collimated rays 82 entering the prism arrangement (depicted in Figure 10 as an upside down "R", rotating them by 180° to form a bundle of generally erect rays 84 (depicted in Figure 10 by an upright "R").

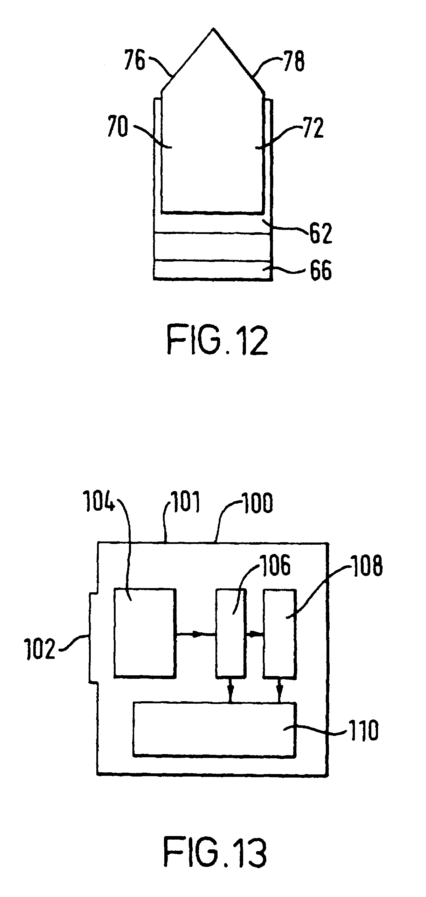

As shown in Figure 12, the second prism element 70 is narrower than the first prism element 60 in width - that is, the direction which lies in the plane cf the first reflective surface 72 and is perpendicular to the direction of the incoming ray 58 which is coincident with the optical axis A-A' of the optical adaptor 10.

The air gap 68 enables total internal reflection to occur when the ray 58 reaches the surface 62 and when the ray 58"reflected from the roof surfaces 76,78 reaches the surface 80. The air gap is preferably dimensioned so as to keep the prism arrangement 32 as compact as possible.

The prism arrangement 32, it will be appreciated, therefore serves to invert the optical radiation passing through the optical adaptor 10 into a proper orientation for a charge coupled device camera which may be attached to the adaptor at the optical outlet 20 and, in addition, the partially reflective/partially transmissive surface 64 acts as a beam splitter which provides an image at the ground glass 26 via the imaging lens group 38. The surface 64 has an optical coating thereon to set the reflectivity/transmissivity thereof at 80%/20%, and different coatings may be used in other embodiments, to vary this ratio. In addition, the prism arrangement 32, by virtue of the second prism element 70 being narrower than the first prism element 60 as discussed above, provides a reduced field of view of an object of the prime lens 22 through the further lens group 34. This ensures that the viewfinder 26 has a greater field of view than any camera to which the optical adaptor is mounted, so that the camera operator is made aware, by appropriate indicia (not shown) on the ground glass 26 of what is inside the field of view of the camera and what is outside this field of view. The optical adaptor 10 preferably provides Academy format at the ground glass 26, with the second prism element 70 cutting the top and bottom off the Academy format to provide 16:9 CCD format for a CCD camera located at the optical outlet 20.

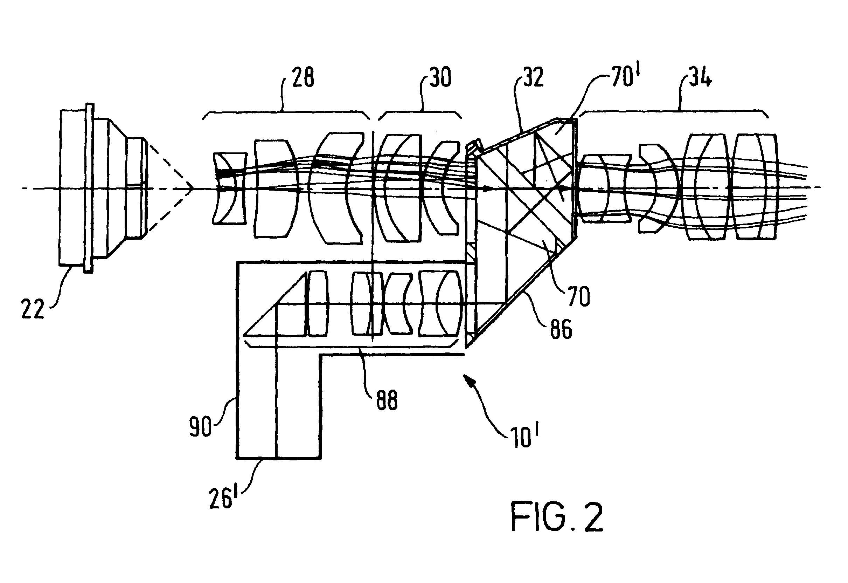

Figure 2 shows an alternative optical adaptor 10'. Similar reference numerals are used in Figure 2 to denote similar components to those in Figure 1. The prism arrangement 32' in Figure 2 has identical first and second prism elements 60, 70 to those in Figure 1 but has no support block 66 and includes a further planer reflective surface 86 which transmits an image via optics 88 of a dog-leg periscope 90 to a ground glass 26'. The dog-leg periscope 90 may be more compact than the periscope 24 shown in Figure 1 and therefore may be more suitable in certain circumstances.

Figure 13 shows, schematically, a CCD camera 100 for use with either of the optical adaptors 10,10'. The camera 100 has a body 101 with an inlet 102 which may be coupled to the optical outlet 20, a colour-splitting prism arrangement 104, leading to CCD array means 106 which, in turn, is coupled to a signal processor 108 and/or storage means 110. The signal processor 108 and storage means 110 may also be intercoupled.

In one embodiment, the input object plane of the optical adaptor has an aspect ratio of Academy format, with a diagonal of 27.2mm. The output image plane is of a ratio of 16:9 with a diagonal of 16mm. Both housings 10,10' are 236mm in length. The magnification of the optical adaptor is 0.588 and the f number in the image space is f/2.8.

Optical adaptors in accordance with preferred embodiments are able to deal with prime lens exit pupils positioned in front of their nominal intermediate image or input planes by 25mm to 600mm, preferably 18mm to 600mm, with less than 1% distortion across the full image plane and with minimal or no vignetting with all prime lenses with exit pupils within these ranges. Prefered adaptors are therefore able successfully to relay the image plane from a range of prime lenses on to the image plane of an HD CCD colour camera system, and they therefore allow complete use, with one camera, of the majority of 35mm zoom lenses which are based on Academy format.

## Claims

1. An optical adaptor for optically connecting an optical prime lens to an electronic camera, the optical adaptor comprising a housing with an optical inlet for receiving radiation from an optical prime lens, an optical outlet for directing an optical output towards an electronic camera, and a field lens changer, the field lens changer being adapted to retain a plurality of field lens arrangements thereon, the field lens changer being adapted to move a selected field lens arrangement, when retained on the field lens changer, into an optical path between the optical inlet and optical outlet to a position in which the selected lens arrangement forms a field lens of the optical adaptor.

2. An optical adaptor as claimed in claim 1 which includes a prism arrangement located in the housing optically between the optical inlet and optical outlet, the prism arrangement including a beam splitter for splitting radiation from the optical inlet into two optical paths, one leading towards the optical outlet and the other leading towards a viewfinder outlet of the housing.

3. An adaptor for optically connecting an optical prime lens to an electronic camera, the optical adaptor comprising a housing with an optical inlet for receiving radiation from an optical prime lens, an optical outlet for directing an optical output towards an electronic camera, and a prism arrangement located in the housing optically between the optical inlet and outlet, the prism arrangement including a beam splitter for splitting radiation from the optical inlet into two optical paths, one leading towards the optical outlet and the other leading towards a viewfinder outlet of the housing.

4. An optical adaptor as claimed in claim 2 or claim 3 in which the prism arrangement is adapted to direct towards the optical outlet, optical radiation with a configuration rotated 180° from the configuration of optical radiation entering the prism arrangement from the optical inlet.

5. An optical adaptor as claimed in any one of claims 2 to 4 in which the prism arrangement is adapted to reduce, in at least one direction, the field of view of optical radiation directed towards the optical outlet, relative to that of optical radiation directed towards the viewfinder outlet.

6. An optical adaptor as claimed in any one of claims 2 to 5 in which the prism arrangement comprises first and second prism elements.

7. An optical adaptor as claimed in claim 6 in which the first prism element includes first and second substantially planar reflective surfaces in an optical path leading from the optical inlet to the optical outlet, the second planar reflective surface in the optical path being partially reflective and comprising the beam splitter.

8. An optical adaptor as claimed in claim 6 or claim 7 in which the second prism element includes first, second, third and fourth substantially planar reflective surfaces in an optical path leading from the optical inlet to the optical outlet of the housing, the second and third of these surfaces being substantially perpendicular to each other.

9. An optical adaptor as claimed in claim 6 or claim 7 or claim 8 which includes an air gap between the first and second prism elements.

10. An optical adaptor as claimed in any one of claims 6 to 9 in which the first and second prism elements include, spaced from one another, substantially parallel and planar adjacent surfaces, the adjacent surface of the second prism element being narrower in at least one direction than the adjacent surface of the first prism element.

11. An optical adaptor as claimed in any one of claims 2 to 10 which includes a viewfinder mounted to the viewfinder outlet, the viewfinder including a ground glass.

12. An optical adaptor as claimed in any one of claims 2 to 11 which includes first and second lens arrays mounted in the housing, the first lens array being located in an optical path leading from the optical inlet to the prism arrangement, and the second lens array being located in an optical path leading from the prism arrangement to the optical outlet.

13. An optical adaptor as claimed in claim 12 in which at least one of the lens arrays comprises a plurality of optical lenses which are fixedly mounted in the housing.

14. An optical adaptor as claimed in any one of claims 3 to 13 which includes a field lens changer which is adapted to retain a plurality of field lens arrangements thereon, the field lens changer being adapted to move a selected field lens arrangement, when retained on the field lens changer, into an optical path between the optical inlet and optical outlet of the housing to a position in which the selected field lens arrangement forms a field lens of the optical adaptor.

15. An optical adaptor as claimed in claim 1 or claim 2 or claim 14 in which the field lens changer comprises a rotatable turret, the turret being mounted to the housing by an axle and having a series of lens arrangement retainers at locations spaced around the axle, the axle being offset from and substantially parallel to an optical axis of the optical adaptor.

16. A optical adaptor as claimed in claim 1 or claim 2 or claim 14 or claim 15 which includes a plurality of field lens arrangements mounted to the field lens changer, at least two of the field lens arrangements having different nominal entrance pupil to input plane distances.

17. An optical adaptor as claimed in claim 16 which includes at least 3, preferably at least 6, field lens arrangements mounted to the field lens changer, the field lens arrangements having a series of different entrance pupil to input plane distances which provide approximately equal increments in angle of the chief ray accepted by the adaptor.

18. An optical adaptor as claimed in claim 1 or any one of claims 14 to 17 in which the lens changer is sealed inside the housing.

19. An electronic camera including an electronic image receiving means, and an optical adaptor as claimed in any one of the preceding claims mounted to a body of the camera for directing optical radiation along an optical path leading to the electronic image receiving means.

20. An electronic camera as claimed in claim 19 in which the electronic image receiving means comprises a charge coupled device array.

21. An electronic camera as claimed in claim 19 or claim 20 which includes colour splitting means, preferably prism means, located optically between the adaptor and the image receiving means.
